# EUROPÄISCHE PATENTSCHRIFT

(11) **EP 2 738 559 B1**
(45) Veröffentlichungstag und Bekanntmachung des Hinweises auf die Patenterteilung: **08.01.2020**
(21) Anmeldenummer: 12194558.8
(22) Anmeldetag: 28.11.2012
(51) Int. Cl.: G01N 35/00, G06F 1/32

(54) **Verfahren zum vorübergehenden Betrieb eines automatischen Analysegeräts in einem Bereitschaftsmodus**
Method for the temporary operation of an automatic analyzer in a standby mode
Procédé de fonctionnement temporaire d'un appareil d'analyse automatique dans un mode de préparation

(43) Veröffentlichungstag der Anmeldung: 04.06.2014
(73) Patentinhaber: Siemens Healthcare Diagnostics Products GmbH, 35041 Marburg (DE)
(72) Erfinder: Bugner, Dirk, 55122 Mainz (DE); Preidel, Markus, 60320 Frankfurt (DE); Proch, Klaus, 35447 Reiskirchen (DE); Pufahl, Holger, 65835 Liederbach (DE)

(56) Entgegenhaltungen:
- WO-A1-2012/070557
- US-A- 5 721 936
- US-A1- 2002 049 921
- US-A1- 2004 257 898

## Beschreibung

Die Erfindung liegt auf dem Gebiet der In-Vitro-Diagnostik und betrifft ein automatisches Analysegerät sowie ein Verfahren zum vorübergehenden, energiesparenden Betrieb des Analysegeräts in einem Bereitschaftsmodus, wobei das Analysegerät eine zentrale Steuereinheit und eine Bereitschaftssteuereinheit umfasst.

Zahlreiche Nachweis- und Analyseverfahren zur Bestimmung physiologischer Parameter in Körperflüssigkeitsproben wie Blut, Plasma, Serum oder Urin oder in anderen biologischen Proben werden heute automatisiert in entsprechenden Analysegeräten durchgeführt.

Heutige Analysegeräte sind in der Lage, eine Vielzahl verschiedenartiger Nachweisreaktionen und Analysen mit einer Vielzahl von Proben durchzuführen. Gängige Analysegeräte, wie sie im klinischen Labor oder in Blutbanken zum Einsatz kommen, umfassen üblicherweise einen Bereich für die Zuführung von Probengefäßen, die die zu analysierenden Primärproben enthalten. Zur Einspeisung der Probengefäße in das Analysegerät ist üblicherweise ein Transportsystem vorgesehen, das die Probengefäße zunächst zu einer Probenidentifikationseinrichtung transportiert, die probenspezifische Informationen, die auf einem Probengefäß angebracht sind, erfasst und in eine Speichereinheit weiterleitet. Anschließend werden die Probengefäße zu einer Probenentnahmestation transportiert. Mit Hilfe einer Probenpipettiereinrichtung wird dort mindestens ein Aliquot der Probenflüssigkeit aus einem Probengefäß entnommen und in ein Reaktionsgefäß transferiert.

Bei den Reaktionsgefäßen handelt es sich in der Regel um Einwegküvetten, die in einem Küvettenbehälter im Analysegerät vorrätig gehalten werden und die automatisch aus dem Vorratsbehälter in definierte Aufnahmepositionen transferiert werden. Es existieren jedoch auch Geräte, bei denen die Küvetten mehrfach verwendet werden, indem sie vor dem nächsten Gebrauch gewaschen werden. Die Reagenzien, die für die Bereitstellung von verschiedenartigen, testspezifischen Reaktionsansätzen erforderlich sind, befinden sich in Reagenzbehältern, die in einer Reagenzstation aufbewahrt werden. Die Reagenzbehälter werden dem Analysegerät entweder automatisch oder manuell zugeführt.

Die Reagenzstation verfügt üblicherweise über eine Kühleinheit, um eine möglichst lange Haltbarkeit der Reagenzien sicherzustellen. Mit Hilfe einer Reagenzpipettiereinrichtung, die im Übrigen häufig eine Heizvorrichtung aufweist, wird ein Aliquot eines oder mehrerer Reagenzien in ein Reaktionsgefäß transferiert, in dem sich bereits die zu untersuchende Probe befindet. Je nach Art der biochemischen Reaktion, die durch die Zugabe der Reagenzien zu einer Probe in Gang gesetzt wird, kann eine unterschiedlich lange Inkubationszeit des Reaktionsansatzes erforderlich sein. In jedem Fall wird das Reaktionsgefäß mit dem Reaktionsansatz schließlich einem Messsystem zugeführt, das eine physikalische Eigenschaft des Reaktionsansatzes misst.

Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Neben den beschriebenen wesentlichen Funktionen verfügt ein automatisches Analysegerät über eine Vielzahl weiterer Komponenten, wie beispielsweise Schrittmotoren zum Antrieb von Pipettiereinrichtungen, Küvettengreifern oder anderen beweglichen Einrichtungen, Temperatursensoren, Drucksensoren, Bewegungssensoren, Flüssigkeitsleveldetektoren, Heizelemente, Ventilatoren, Lichtquellen und viele mehr. Das hochkomplexe Zusammenspiel aller Komponenten und Funktionen eines automatischen Analysegeräts wird durch eine zentrale Steuereinheit, üblicherweise in Form eines Personal Computers mit Speichermedium, Recheneinheit, Bildschirm und Tastatur, gesteuert.

Um all diese Funktionen und Komponenten zu betreiben, muss dem automatischen Analysegerät elektrische Energie zugeführt werden. Problematisch ist vor allem der Stromverbrauch des Analysegerätes, wenn es keine Tests durchführt, aber in Einsatzbereitschaft gehalten wird. Ist das Analysegerät nicht im Einsatz, d.h. sind keine Analysen angefordert, ist es üblich, Analysegeräte in einen Bereitschaftsmodus zu versetzen. Dazu werden diverse Funktionen des Gerätes wie z.B. bewegliche Einrichtungen, Heizungen oder Lichtquellen abgeschaltet, und die zentrale Steuereinheit wird in einen internen Ruhemodus versetzt, um den Stromverbrauch zu senken.

Nachteilig ist jedoch, dass die Wiederherstellung des Betriebsmodus umso länger dauert, je mehr Komponenten des Analysegerätes abgeschaltet sind. Da die Wiederherstellung des Betriebsmodus jedoch möglichst wenig Zeit in Anspruch nehmen darf, insbesondere in klinischen Laboren, die jederzeit auf die Bearbeitung von Notfallproben vorbereitet sein müssen, wird typischerweise die gesamte Elektronik des Geräts unter Strom gehalten, so dass das Gerät sehr schnell wieder in Betrieb genommen werden kann. In allen Fällen bleibt jedoch die zentrale Steuereinheit, die typischerweise als Personal Computer ausgelegt ist, unter Strom. Dadurch ergibt sich ein erheblicher Stromverbrauch des Geräts auch während Zeiten der Nichtnutzung.

WO 2012/070577 Al beschreibt ein automatisches Analysegerät welches beim Übergang in den Bereitschaftsmodus zumindest einen Parameter des Systemzustandes des Analysegerätes speichert.

Es ist daher Aufgabe der Erfindung, ein Verfahren bereit zu stellen, mit dem ein automatisches Analysegerät vorübergehend in einem Bereitschaftsmodus betrieben werden kann, das den Stromverbrauch erheblich senkt und gleichzeitig eine möglichst rasche Wiederherstellung des Betriebsmodus ermöglicht.

Diese Aufgabe wird gelöst, indem das automatische Analysegerät mit einer Bereitschaftssteuereinheit ausgestattet ist und das Verfahren die folgenden Schritte umfasst:
- Inbetriebsetzen der Bereitschaftssteuereinheit,
- Speichern zumindest eines ermittelten Systemzustandes des automatischen Analysegerätes in der zentralen Steuereinheit, und
- Außerbetriebsetzen der zentralen Steuereinheit.

In einer bevorzugten Ausführungsform des Verfahrens überwacht die Bereitschaftssteuereinheit während des Bereitschaftsmodus eine Anzahl von Betriebsparametern auf eine Abweichung von einem vorbestimmten Sollwert.

Ein weiterer Gegenstand der vorliegenden Erfindung ist ein Verfahren zur Wiederherstellung des Betriebsmodus in einem automatischen Analysegerät, welches mit dem zuvor beschriebenen erfindungsgemäßen Verfahren in einem Bereitschaftsmodus betrieben wird. Vorteilhafterweise umfasst das Verfahren zur Wiederherstellung des Betriebsmodus die weiteren Verfahrensschritte
- Wiederinbetriebsetzen der zentralen Steuereinheit, und
- Laden der von der Bereitschaftssteuereinheit überwachten Betriebsparameter in die zentrale Steuereinheit.

Die Erfindung geht dabei von der Überlegung aus, dass eine Senkung des Stromverbrauchs während einer Zeit der Nichtnutzung insbesondere dadurch erreicht werden könnte, wenn die zentrale Steuereinheit vollständig außer Betrieb gesetzt werden könnte. Dazu wird eine eigene Bereitschaftssteuereinheit vorgesehen, die unabhängig von der zentralen Steuereinheit ist. Da die Bereitschaftssteuereinheit keine Steuerung von Analysen vornehmen muss, kann sie wesentlich einfacher und stromsparender ausgelegt werden als die zentrale Steuereinheit. Hierbei ist jedoch von Nachteil, dass beim Ausschalten der zentralen Steuereinheit auch die Systemzustände verloren gehen, d.h. der Status der einzelnen Bauteile oder Funktionseinheiten des Systems. Diese müssen in einer aufwändigen Prozedur beim Neustart des Systems erst wieder ermittelt werden, wodurch sich die Zeit zur Wiederinbetriebnahme erheblich verlängert. Daher werden die Systemzustände vor der Deaktivierung der zentralen Steuereinheit gespeichert, die Bereitschaftssteuereinheit wird in Betrieb genommen, und die zentrale Steuereinheit wird außer Betrieb gesetzt.

Unter dem Begriff "zentrale Steuereinheit" ist eine Steuereinheit zu verstehen, die so konfiguriert ist, dass sie alle Funktionseinheiten des automatischen Analysegeräts steuert, wenn sich das Gerät im so genannten Betriebsmodus befindet. Im Betriebsmodus sind alle Funktionseinheiten des Gerätes aktiv oder zumindest unmittelbar einsatzbereit. Die zentrale Steuereinheit ist bevorzugterweise als Personal Computer ausgelegt.

Unter dem Begriff "Bereitschaftssteuereinheit" ist eine Steuereinheit zu verstehen, die so konfiguriert ist, dass sie nur eine Teilmenge aller Funktionseinheiten des automatischen Analysegeräts steuert, wenn sich das Gerät in einem so genannten Bereitschaftsmodus befindet. Im Bereitschaftsmodus ist nur eine Teilmenge aller Funktionseinheiten des automatischen Analysegeräts aktiv, und das Gerät ist in seiner Gesamtheit nicht unmittelbar einsatzbereit, d.h. eine unmittelbare Durchführung von Analysen ist nicht möglich. Die Bereitschaftssteuereinheit ist bevorzugterweise als programmierbarer Mikrocontroller oder digitales Kontrollmodul ausgelegt, der auf einer Platine angeordnet ist und nur mit einer Teilmenge der Funktionseinheiten des automatischen Analysegeräts in Verbindung steht.

In einer bevorzugten Ausführungsform ist das automatische Analysegerät, welches eine zentrale Steuereinheit aufweist, mit einer Bereitschaftssteuereinheit ausgestattet, die so konfiguriert ist, dass sie nach Außerbetriebsetzen der zentralen Steuereinheit eine Anzahl von Betriebsparametern auf eine Abweichung von einem vorbestimmten Sollwert überwacht.

Beispielsweise kann während des Bereitschaftsmodus die Temperatur in der Kühleinheit auf Verbleib in einem vorbestimmten Temperaturintervall geprüft werden. Es kann auch mittels entsprechender Sensoren geprüft werden, ob Gehäuseteile während des Bereitschaftsmodus geöffnet wurden. Eventuelle Abweichungen vom Sollwert werden in der Bereitschaftssteuereinheit gespeichert und bei Wiederinbetriebnahme an die zentrale Steuereinheit übergeben. Hier können sie weiter verarbeitet werden und die Gültigkeit der gespeicherten Systemzustände kann anhand der erkannten Abweichungen überprüft werden.

Vorteilhafterweise steuert die Bereitschaftssteuereinheit einen elektrischen Schalter, der die zentrale Steuereinheit von der Spannungsversorgung trennt. Diese Trennung erfolgt im Zuge des Außerbetriebsetzens der zentralen Steuereinheit beim Übergang in den Bereitschaftsmodus.

Moderne automatische Analysegeräte umfassen häufig eine Kühleinheit für Reagenzien, die für Analysen genutzt werden. In vorteilhafter Ausgestaltung betreibt die Bereitschaftssteuereinheit auch die Kühleinheit. Dadurch müssen die Reagenzien zu Zeiten, zu denen keine Analysen durchgeführt werden, z.B. über Nacht, nicht mehr entnommen werden. Die Reagenzien verbleiben im Gerät und werden während des Bereitschaftsmodus weiter gekühlt. Bei der Wiederinbetriebnahme sind sie sofort verfügbar.

Wie bereits beschrieben umfassen automatische Analysegeräte häufig weiterhin Proben- und/oder Reagenzienvorräte. Diese enthalten typischerweise die Proben und die zur Analyse benutzten Reagenzien. Dabei muss der zentralen Steuereinheit zwingend bekannt sein, welche Proben und welche Reagenzien in welchen Positionen im Vorrat abgelegt sind, damit eine automatische Prozessierung möglich ist. In vorteilhafter Ausgestaltung ist der in der zentralen Steuereinheit gespeicherte Systemzustand daher ein Beladungszustand des Proben- bzw. Reagenzienvorrats. Abweichende Beladungszustände können bei der Wiederinbetriebnahme, d.h. beim Übergang vom Bereitschafts- in den Betriebsmodus von der Bereitschaftssteuereinheit in die zentrale Steuereinheit geladen werden. Andernfalls wäre eine umständliche Ermittlung durch automatisierte Entnahme jedes einzelnen Reagenzbehälters und Auslesen beispielsweise eines aufgedruckten Barcodes notwendig, was den Wiederinbetriebnahmeprozess erheblich verlangsamen würde.

Weiterhin umfasst das automatische Analysegerät häufig einen Verbrauchsmaterialien- und/oder Abfallvorrat. Reaktionsgefäße und Pipettenspitzen sind typische Verbrauchsmaterialien, die im Gerät in größeren Stückzahlen in entsprechenden Vorratsbehältern vorrätig gehalten werden und nach einmaliger Benutzung in einen Abfallbehälter entsorgt werden. Vorteilhafterweise ist der in der zentralen Steuereinheit gespeicherte Systemzustand daher ein Beladungszustand eines Vorratsbehälters für ein Verbrauchsmaterial, wie z.B. Reaktionsgefäße oder Pipettenspitzen, und/oder eines Abfallbehälters. Abweichende Beladungszustände können bei der Wiederinbetriebnahme, d.h. beim Übergang vom Bereitschaftsin den Betriebsmodus von der Bereitschaftssteuereinheit in die zentrale Steuereinheit geladen werden. Hierdurch wird vermieden, dass der Status der Verbrauchsmaterialien und des Abfalls bei der Wiederinbetriebsetzung geprüft werden muss.

Das Inbetriebsetzen der Bereitschaftssteuereinheit und damit die Initiierung des Bereitschaftsmodus kann aktiv durch den Befehl eines Benutzers oder nach einer vorgegebenen Zeit der Inaktivität des automatischen Analysegeräts erfolgen. Durch letztere Variante wird ebenfalls der Stromverbrauch reduziert, da auch bei einem Vergessen des Benutzers der Bereitschaftsmodus aktiviert wird.

In vorteilhafter Ausgestaltung überwacht die Bereitschaftssteuereinheit eine Anzahl von Betriebsparametern auf eine Abweichung von einem vorbestimmten Sollwert.

Weiterhin werden vorteilhafterweise beim Wiederinbetriebsetzen der zentralen Steuereinheit durch die Bereitschaftssteuereinheit erkannte Abweichungen einem Benutzer angezeigt. Der Benutzer kann dann beurteilen, ob z.B. eine Öffnung des Gehäuses kritisch für den Beladungszustand war, da Reagenzien entnommen wurden, oder ob lediglich eine optische Prüfung stattfand. Der Benutzer kann auch entscheiden, dass eine Temperaturabweichung beispielsweise so minimal war, dass ein Austausch der Reagenzien nicht erforderlich ist.

Alternativ kann auf eine Benutzereingabe der Systemzustand neu ermittelt. Sollten die Abweichungen nämlich derart gewesen sein, dass die Informationen, die in der Bereitschaftssteuereinheit gespeichert waren, nicht mehr vertrauenswürdig sind, werden die entsprechenden Informationen neu ermittelt. Dies ist jedoch nicht zwingend erforderlich.

Die mit der Erfindung erzielten Vorteile bestehen insbesondere darin, dass durch eine separate Bereitschaftssteuereinheit die zentrale Steuerungseinheit und weitere Baugruppen und Funktionseinheiten wie Motoren, Ventile und Heizungen des automatischen Analysegeräts im Bereitschaftsmodus deaktiviert werden können und so eine erhebliche Energieeinsparung erreicht wird. Hierdurch kann der Verbrauch um bis zu 300 W gegenüber im Stand der Technik bekannten Systemen gesenkt werden. Durch die Speicherung von Systemzuständen und Statusänderungen während des Bereitschaftsmodus ist es möglich, insbesondere ohne erneute zeitraubende Ermittlung eines Systemzustands wieder in den betriebsbereiten Zustand (Betriebsmodus) überzugehen. Durch die Überwachung von relevanten Betriebsparametern während des Bereitschaftsmodus und Beurteilung von Abweichungen durch den Benutzer beim Beenden des Bereitschaftsmodus und Wiederinbetriebnahme des automatischen Analysegeräts kann dieser Übergang sehr sicher erfolgen.

Die Erfindung wird anhand einer Zeichnung näher erläutert. Darin zeigen:
- FIG 1: eine schematische Darstellung eines automatischen Analysegeräts in einem Betriebsmodus, und
- FIG 2: eine schematische Darstellung eines automatischen Analysegeräts in einem Bereitschaftsmodus.

Gleiche Teile sind in beiden Figuren mit denselben Bezugszeichen versehen.

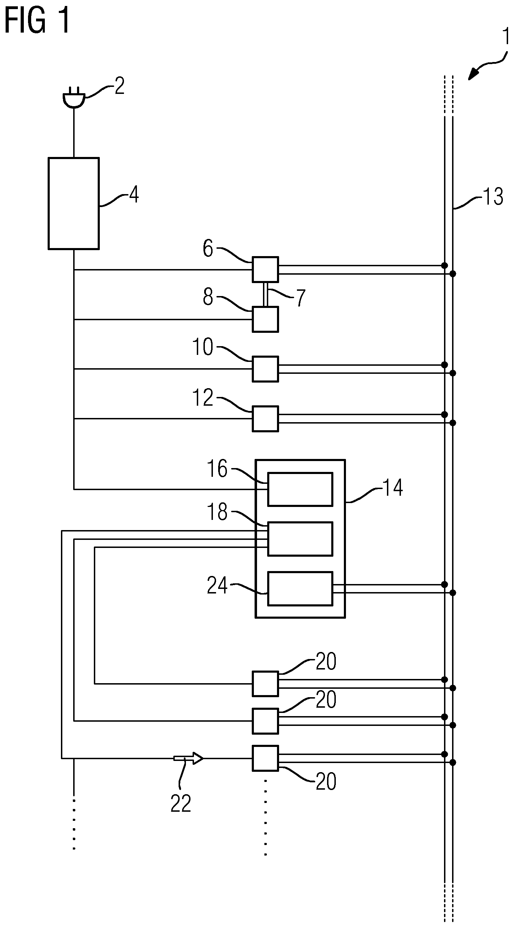

FIG 1 zeigt schematisch den Aufbau eines automatischen Analysegeräts 1. Elektrische Versorgungsleitungen sind dabei mit einfachen Linien im linken Bereich der FIG 1 gezeigt, Datenverbindungsleitungen mit doppelten Linien im rechten Bereich. Das automatische Analysegerät 1 weist einen Steckverbinder 2 für die Stromversorgung aus einer Steckdose eines 220-V- oder 110-V-Wechselstromnetzes auf. Der Steckverbinder 2 ist an einen Wechselstromverteiler 4 angeschlossen. Der Wechselstromverteiler 4 ist mit denjenigen Systemen des automatischen Analysegeräts 1 verbunden, die für eine Versorgung mit Wechselspannung ausgelegt sind.

Zu diesen Systemen gehören die zentrale Steuereinheit 6, die als Personal Computer ausgelegt ist, ein Bildschirm 8, der mit der zentralen Steuereinheit über eine als DVI- oder VGA-Kabel ausgelegte Grafikdatenverbindung 7 verbunden ist, eine Vakuumpumpe 10 sowie eine Kühleinheit 12, die insbesondere einen Kühlkompressor umfasst. Die Kühleinheit 12 dient insbesondere zur Kühlung eines nicht näher dargestellten Reagenzienvorrats, in dem eine Vielzahl von Reagenzien für verschiedene diagnostische Tests aufbewahrt wird. Diese werden von einem ebenfalls nicht näher dargestellten Entnahmesystem bedarfsweise automatisiert entnommen.

An den Wechselstromverteiler 4 ist ein Gleichstromverteiler 14 angeschlossen. Dieser umfasst ein Netzteil 16 mit einem Gleichrichter zur Umwandlung des Wechselstroms aus dem Wechselstromverteiler 4 in eine 24 V-Gleichspannung. Weiterhin umfasst der Gleichstromverteiler 14 eine Ausgangseinheit 18, die die 24 V-Gleichspannung an verschiedene gleichstrombetriebene Module 20 des automatischen Analysegeräts 1 abgibt.

Die gleichstrombetriebenen Module 20 umfassen unter anderem ein bei der Analyse verwendetes Photometer, welches drehbar gelagert ist und daher über einen Schleifring 22 versorgt wird. Weiterhin umfassen die gleichstrombetriebenen Module 20 Elektromotoren der Transfersysteme für Proben, Aliquots und Reagenzien und weitere Bauteile. Weiterhin umfassen die Module 20 Sensoren, die Betriebszustände des automatischen Analysegeräts überwachen, so z.B.die Öffnung des Gehäuses. Ist das gesamte automatische Analysegerät 1 in Betrieb, liegt die Leistungsaufnahme im Ausführungsbeispiel bei ca. 1500 W. In der FIG 1 sind aus Gründen der Übersichtlichkeit nur drei Module 20 dargestellt.

Datenseitig sind die verschiedenen Bauteile des automatischen Analysegeräts 1 über einen Datenbus 13 verbunden. Der Datenbus 13 leitet einerseits Steuerdaten von der zentralen Steuereinheit 6 an die Module 20, die Vakuumpumpe 10 und die Kühleinheit 12. Andererseits werden Daten von diesen Bauteilen an die zentrale Steuereinheit 6 geleitet. Diese umfassen auch Sensordaten, die von den jeweils diesen Bauteilen zugeordneten Sensoren erfasst werden.

In einer Phase der Nichtbenutzung des automatischen Analysegeräts 1 kann die zentrale Steuereinheit 6 in einen Ruhezustand versetzt werden. Die Stromversorgung für alle der in FIG 1 gezeigten Bauteile bleibt jedoch erhalten. Selbst wenn keines der Module 20 aktiv ist, bleibt die Stromaufnahme im Ausführungsbeispiel so bei ca. 500 bis 600 W.

Zur weiteren Reduzierung dieser Stromaufnahme weist das automatische Analysegerät 1 eine Bereitschaftssteuereinheit 24 auf. Die Bereitschaftssteuereinheit 24 ist vergleichsweise einfach ausgelegt und hat eine geringe Stromaufnahme. Sie ist nicht wie die zentrale Steuereinheit 1 als Personal Computer ausgestaltet, sondern umfasst lediglich eine Platine mit einem Mikrocontroller mit zugeordnetem Speicher und entsprechenden Anschlüssen an Datenbus 13 und an die Stromversorgung. Die Bereitschaftssteuereinheit 24 ist in das Gehäuse des Gleichstromverteilers 14 integriert und kann über nicht näher gezeigte elektrische Schalter die Stromversorgung zu den einzelnen Bauteilen (z.B. 6, 8, 10 und 12) des automatischen Analysegeräts 1 unterbrechen.

Durch eine Benutzereingabe an der zentralen Steuereinheit 6 oder nach einer an der zentralen Steuereinheit 6 einstellbaren Periode der Inaktivität des automatischen Analysegeräts 1 wird der Bereitschaftsmodus aktiviert. Dazu wird zunächst die Bereitschaftssteuereinheit 24 in Betrieb gesetzt. Die zentrale Steuereinheit 6 speichert dann eine Vielzahl von Systemzuständen, insbesondere den Beladungs- und Füllzustand des Reagenzienvorrats, den Beladungszustand des Abfallvorrats und der Vorräte verschiedener Verbrauchsmaterialien wie z.B. Küvetten, Pipettenspitzen etc. Beliebige weitere Systemzustände, deren Kenntnis für den Betrieb des Systems erforderlich ist, sind denkbar.

Anschließend wird die zentrale Steuereinheit 6 außer Betrieb gesetzt. Das Außerbetriebsetzen umfasst hier nicht lediglich einen Ruhezustand, sondern die zentrale Steuereinheit 6 wird durch einen von der Bereitschaftssteuereinheit 24 steuerbaren elektrischen Schalter von der Spannungsversorgung durch den Wechselstromverteiler 4 getrennt. Gleiches gilt für den Bildschirm 8 und die Vakuumpumpe 10. Ebenso werden alle bis auf einzelne der Module 20 von der Spannungsversorgung durch den Gleichstromverteiler 18 durch einen von der Bereitschaftssteuereinheit 24 steuerbaren elektrischen Schalter getrennt.

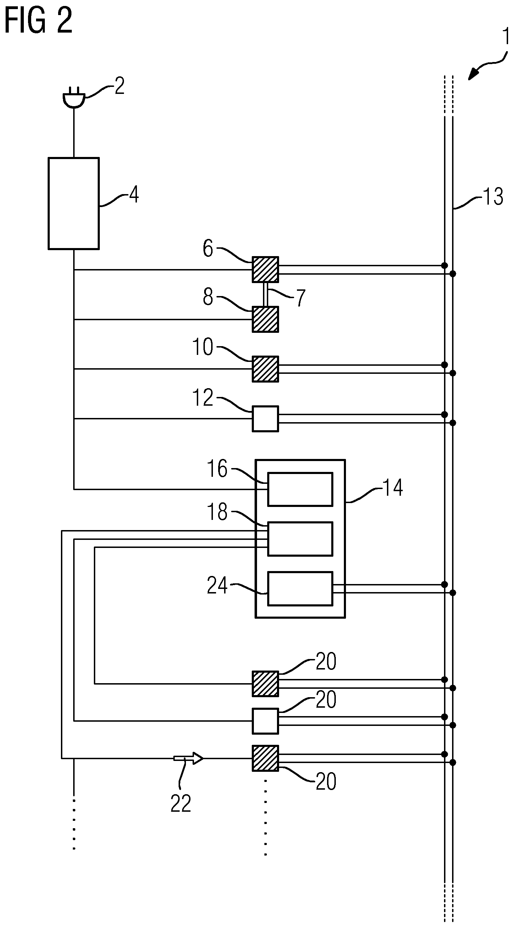

Der Bereitschaftsmodus ist in der FIG 2 dargestellt, die im Wesentlichen alle Bauteile aus der FIG 1 zeigt; die von der elektrischen Versorgung getrennten Bauteile sind jedoch schraffiert dargestellt. Lediglich wenige Module 20, insbesondere Sensoren, die den Zugang zum Gehäuse des automatischen Analysegeräts 1 überwachen, sind noch aktiv, ebenso der Wechselstromverteiler 4, der Gleichstromverteiler 14, die Kühleinheit 12 und natürlich die Bereitschaftssteuereinheit 24. Die Bereitschaftssteuereinheit 24 ist dabei so ausgelegt, dass der Betrieb der noch aktiven Bauteile im Bereitschaftsmodus über den Datenbus 13 erfolgen kann.

Die Bereitschaftssteuereinheit 24 überwacht die aktiven Module 20, insbesondere die Sensoren, sowie die Kühleinheit 12 hinsichtlich bestimmter Betriebsparameter auf Abweichungen von einem vorgegebenen Sollwert, so z.B. das Gehäuse auf Öffnen oder die Temperatur im Reagenzienvorrat. Für die Datenübertragung wird dabei auch im Bereitschaftsmodus der Datenbus 13 verwendet. Jede Abweichung wird im Speicher der Bereitschaftssteuereinheit 24 protokolliert. Hierbei werden Zeitpunkt und Art der Abweichung aufgezeichnet. Während des Bereitschaftsmodus wird so der Stromverbrauch im Ausführungsbeispiel auf 200 bis 250 W begrenzt.

Die Reaktivierung des automatischen Analysegeräts 1 in den Betriebszustand kann wiederum entweder durch Benutzereingabe über einen Schalter, der der Bereitschaftssteuereinheit 24 zugeordnet ist, oder aber nach einer in der Bereitschaftssteuereinheit 24 einstellbaren Periode oder einer festen Uhrzeit erfolgen. Zunächst werden dabei die von der Stromversorgung getrennten Bauteile wieder mit Strom versorgt, und die zentrale Steuereinheit 6 wird aktiviert. Anschließend werden die gespeicherten Systemzustände in die zentrale Steuereinheit 6 geladen und stehen somit direkt zur Verfügung und müssen nicht zeitraubend neu ermittelt werden.

Ebenso werden die während des Bereitschaftsmodus von der Bereitschaftssteuereinheit 24 protokollierten Abweichungen in die zentrale Steuereinheit 6 übergeben. Falls Abweichungen vom Sollzustand aufgetreten sind, wird der Benutzer informiert. Der Benutzer kann so über die Beibehaltung der Informationen über die Systemzustände entscheiden.

Wenn keine Abweichungen auftreten bzw. erkannte Abweichungen vom Benutzer als unkritisch eingestuft werden, ist das automatische Analysegerät 1 nach der Aktivierung betriebsbereit. Alle relevanten Systemzustände, d.h. insbesondere Status- und Beladungszustände werden korrekt unter Nutzung der in der Bereitschaftssteuereinheit 24 gespeicherten Daten wieder hergestellt. Dies erfolgt wesentlich schneller als die komplette Neuermittlung.

Bei Abweichungen, die vom Benutzer als kritisch bewertet wurden, werden die betroffenen Einheiten je nach Zustand initialisiert bzw. die Beladung neu ermittelt. So können z.B. Reagenzien neu identifiziert oder, bei längerer Über- oder Unterschreitung der zulässigen Lagertemperatur, entsorgt werden.

### BEZUGSZEICHENLISTE

- 1: automatisches Analysegerät
- 2: Steckverbinder
- 4: Wechselstromverteiler
- 6: zentrale Steuereinheit
- 7: Grafikdatenverbindung
- 8: Bildschirm
- 10: Vakuumpumpe
- 12: Kühleinheit
- 13: Datenbus
- 14: Gleichstromverteiler
- 16: Netzteil
- 18: Ausgangseinheit
- 20: Modul
- 22: Schleifring
- 24: Bereitschaftssteuereinheit

## Patentansprüche

1. Verfahren zum Betreiben eines automatischen Analysegerätes (1) in einem Bereitschaftsmodus, wobei das automatische Analysegerät (1) eine zentrale Steuereinheit (6) und eine Bereitschaftssteuereinheit (24) umfasst, mit den Verfahrensschritten
- Inbetriebsetzen der Bereitschaftssteuereinheit (24),
- Speichern zumindest eines ermittelten Systemzustandes des automatischen Analysegerätes (1) in der zentralen Steuereinheit, und
- Außerbetriebsetzen der zentralen Steuereinheit (6).

2. Verfahren nach Anspruch 1, wobei das Außerbetriebsetzen der zentralen Steuereinheit (6) erfolgt, indem die zentrale Steuereinheit (6) durch einen von der Bereitschaftssteuereinheit (24) steuerbaren elektrischen Schalter von der Spannungsversorgung getrennt wird.

3. Verfahren nach einem der vorhergehenden Ansprüche, bei dem das automatische Analysegerät (1) eine Kühleinheit (12) für Reagenzien umfasst und wobei die Bereitschaftssteuereinheit (24) die Kühleinheit (12) betreibt.

4. Verfahren nach einem der vorhergehenden Ansprüche, bei dem das automatische Analysegerät (1) einen Proben- und/oder Reagenzienvorrat umfasst und der Systemzustand ein Beladungszustand des Proben- und/oder Reagenzienvorrats ist.

5. Verfahren nach einem der vorhergehenden Ansprüche, bei dem das automatische Analysegerät (1) einen Vorratsbehälter für ein Verbrauchsmaterial und/oder einen Abfallbehälter umfasst und der Systemzustand ein Beladungszustand des Vorratsbehälters für ein Verbrauchsmaterial und/oder des Abfallbehälters ist.

6. Verfahren nach einem der vorhergehenden Ansprüche, bei dem das Inbetriebsetzen der Bereitschaftssteuereinheit (24) nach einer vorgegebenen Zeit der Inaktivität des automatischen Analysegeräts (1) erfolgt.

7. Verfahren nach einem der vorhergehenden Ansprüche, bei dem die Bereitschaftssteuereinheit (24) eine Anzahl von Betriebsparametern auf eine Abweichung von einem vorbestimmten Sollwert überwacht.

8. Verfahren zur Wiederherstellung eines Betriebsmodus in einem automatischen Analysegerät (1), welches mit einem Verfahren gemäß Anspruch 7 in einem Bereitschaftsmodus betrieben wird, wobei das Verfahren folgende weitere Schritte umfasst:
- Wiederinbetriebsetzen der zentralen Steuereinheit (6), und
- Laden der von der Bereitschaftssteuereinheit (24) überwachten Betriebsparameter in die zentrale Steuereinheit (6).

9. Verfahren nach Anspruch 8, bei dem erkannte Abweichungen der Betriebsparameter von einem vorbestimmten Sollwert einem Benutzer angezeigt werden.

10. Verfahren nach Anspruch 9, bei dem auf eine Benutzereingabe der Systemzustand von der zentralen Steuereinheit (6) neu ermittelt wird.

11. Automatisches Analysegerät (1) mit einer zentralen Steuereinheit (6) und einer Bereitschaftssteuereinheit (24), wobei die Bereitschaftssteuereinheit (24) so konfiguriert ist, dass sie nach Außerbetriebsetzen der zentralen Steuereinheit (6) eine Anzahl von Betriebsparametern auf eine Abweichung von einem vorbestimmten Sollwert überwacht.

12. Automatisches Analysegerät (1) nach Anspruch 11, wobei die Bereitschaftssteuereinheit (24) einen elektrischen Schalter steuert, der die zentrale Steuereinheit (6) von der Spannungsversorgung trennt.

13. Automatisches Analysegerät (1) nach Anspruch 11 oder 12, das eine Kühleinheit (12) für Reagenzien umfasst, wobei die Bereitschaftssteuereinheit (24) zum Betrieb der Kühleinheit (12) konfiguriert ist.

## Claims

1. Method for operating an automated analysis device (1) in a standby mode, the automated analysis device (1) comprising a central control unit (6) and a standby control unit (24), the method having the following method steps:
- starting up the standby control unit (24),
- storing at least one established system state of the automated analysis device (1) in the central control unit, and
- shutting down the central control unit (6).

2. Method according to Claim 1, wherein the central control unit (6) is shut down by virtue of the central control unit (6) being separated from the voltage supply by an electric switch that can be controlled by the standby control unit (24) .

3. Method according to one of the preceding claims, in which the automated analysis device (1) comprises a cooling unit (12) for reagents and wherein the standby control unit (24) operates the cooling unit (12).

4. Method according to one of the preceding claims, in which the automated analysis device (1) comprises a sample and/or reagent storage and the system state is a load state of the sample and/or reagent storage.

5. Method according to one of the preceding claims, in which the automated analysis device (1) comprises a storage container for a consumable and/or a waste container and the system state is a load state of the storage container for a consumable and/or of the waste container.

6. Method according to one of the preceding claims, in which the standby control unit (24) is started up after a predetermined period of inactivity of the automated analysis device (1).

7. Method according to one of the preceding claims, in which the standby control unit (24) monitors a number of operating parameters for a deviation from a predetermined intended value.

8. Method for restoring an operating mode in an automated analysis device (1), which is operated in a standby mode using a method according to Claim 7, wherein the method comprises the following additional steps:
- restarting the central control unit (6) and
- loading the operating parameters monitored by the standby control unit (24) into the central control unit (6) .

9. Method according to Claim 8, in which identified deviations of the operating parameters from a predetermined intended value are indicated to a user.

10. Method according to Claim 9, in which the system state is reestablished by the central control unit (6) following a user input.

11. Automated analysis device (1) with a central control unit (6) and a standby control unit (24), the standby control unit (24) being configured such that it monitors a number of operating parameters for a deviation from a predetermined intended value after the central control unit (6) is shut down.

12. Automated analysis device (1) according to Claim 11, wherein the standby control unit (24) controls an electric switch which separates the central control unit (6) from the voltage supply.

13. Automated analysis device (1) according to Claim 11 or 12, which comprises a cooling unit (12) for reagents, wherein the standby control unit (24) is configured to operate the cooling unit (12).

## Revendications

1. Procédé pour faire fonctionner un appareil (1) d'analyse automatique dans un mode d'attente, l'appareil (11) d'analyse automatique comprenant une unité (6) centrale de commande et une unité (24) de commande d'attente, comprenant les stades de procédé :
- mise en fonctionnement de l'unité (24) de commande d'attente,
- mise en mémoire d'au moins un état de système déterminé de l'appareil (1) d'analyse automatique dans l'unité centrale de commande et
- mise hors de fonctionnement de l'unité (6) centrale de commande.

2. Procédé suivant la revendication 1, dans lequel la mise hors de fonctionnement de l'unité (6) centrale de commande s'effectue en séparant l'unité (6) centrale de commande de l'alimentation en tension par un interrupteur électrique pouvant être commandé par l'unité (24) de commande d'attente.

3. Procédé suivant l'une des revendications précédentes, dans lequel l'appareil (1) d'analyse automatique comprend une unité (12) de refroidissement de réactifs et dans lequel l'unité (24) de commande d'attente fait fonctionner l'unité (12) de refroidissement.

4. Procédé suivant l'une des revendications précédentes, dans lequel l'appareil (1) d'analyse automatique comprend un réservoir d'échantillons et/ou de réactifs et l'état du système est un état de chargement du réservoir d'échantillons et/ou de réactifs.

5. Procédé suivant l'une des revendications précédentes, dans lequel l'appareil (1) d'analyse automatique comprend un réservoir d'une matière consommable et/ou un récipient de déchet et l'état du système est un état de chargement du réservoir d'une matière consommable et/ou du récipient de déchet.

6. Procédé suivant l'une des revendications précédentes, dans lequel la mise en fonctionnement de l'unité (24) de commande d'attente s'effectue après un temps donné à l'avance d'inactivité de l'appareil (1) d'analyse automatique.

7. Procédé suivant l'une des revendications précédentes, dans lequel l'unité (24) de commande d'attente contrôle un certain nombre de paramètres de fonctionnement sur le point de savoir s'ils s'écartent d'une valeur de consigne déterminée à l'avance.

8. Procédé de rétablissement d'un mode de fonctionnement d'un appareil (1) d'analyse automatique, qui fonctionne suivant un procédé selon la revendication 7 dans un mode d'attente, le procédé comprenant les autres stades suivants :
- remise en fonctionnement de l'unité (6) centrale de commande et
- chargement dans l'unité (6) centrale de commande des paramètres de fonctionnement contrôlés par l'unité (24) de commande d'attente.

9. Procédé suivant la revendication 8, dans lequel des écarts détectés des paramètres de fonctionnement à une valeur de consigne déterminée à l'avance sont indiqués à un utilisateur.

10. Procédé suivant la revendication 9, dans lequel, sur une entrée d'utilisateur, l'état du système est déterminé à nouveau par l'unité (6) centrale de commande.

11. Appareil (1) d'analyse automatique, comprenant une unité (6) centrale de commande et une unité (24) de commande d'attente, l'unité (24) de commande d'attente étant configurée de manière à contrôler, après une mise hors de fonctionnement de l'unité (6) centrale de commande, un nombre de paramètres de fonctionnement sur le point de savoir s'ils s'écartent d'une valeur de consigne déterminée à l'avance.

12. Appareil (1) d'analyse automatique suivant la revendication 11, dans lequel l'unité (24) de commande d'attente commande un interrupteur électrique qui sépare l'unité (6) centrale de commande de l'alimentation en tension.

13. Appareil (1) d'analyse automatique suivant la revendication 11 ou 12, qui comprend une unité (12) de refroidissement de réactifs, l'unité (24) de commande d'attente étant configurée pour faire fonctionner l'unité (12) de refroidissement.
